# EUROPÄISCHE PATENTSCHRIFT

(11) **EP 3 418 045 B1**
(45) Veröffentlichungstag und Bekanntmachung des Hinweises auf die Patenterteilung: **13.05.2020**
(21) Anmeldenummer: 18162730.8
(22) Anmeldetag: 20.03.2018
(51) Int. Cl.: B29D 30/00

(54) **VORRICHTUNG UND VERFAHREN ZUR BESTRAHLUNG VON ROHREIFEN MIT ELEKTRONENSTRAHLEN**
DEVICE AND METHOD FOR TREATING RAW TYRES WITH ELECTRON BEAMS
DISPOSITIF ET PROCÉDÉ D'IRRADIATION DES PNEUS BRUTS PAR FAISCEAUX D'ÉLECTRONS

(30) Priorität: 21.06.2017 DE 102017210338
(43) Veröffentlichungstag der Anmeldung: 26.12.2018
(73) Patentinhaber: Continental Reifen Deutschland GmbH, 30165 Hannover (DE)
(72) Erfinder: Soetbeer, Inga, 29221 Celle (DE); Schramm, Oliver, 31177 Harsum (DE); Reitmann, Sebastian, 31558 Hagenburg (DE); Lohner, Alexander, 30851 Langenhagen (DE)
(74) Vertreter: Finger, Karsten

(56) Entgegenhaltungen:
- EP-A1- 2 960 034
- DE-A1-102015 221 511
- US-A- 5 395 150

## Beschreibung

Die Erfindung betrifft eine Vorrichtung zur Bestrahlung von Rohreifen mit Elektronenstrahlen, umfassend
- ein Strahlenschutzgehäuse,
- eine Elektronenstrahlquelle mit einem im Strahlenschutzgehäuse befindlichen Bestrahlungsfenster,
- eine Eingangsschleuse und eine Ausgangsschleuse, welche Schleusen jeweils an das Strahlenschutzgehäuse angrenzen,
- einen Zubringer zum Transport der Rohreifen durch die Eingangsschleuse in das Strahlenschutzgehäuse,
- eine Abtransporteinrichtung zum Abtransport bestrahlter Rohreifen aus dem Strahlenschutzgehäuse durch die Ausgangsschleuse,
- eine im Strahlenschutzgehäuse positionierte drehbare Greifeinrichtung zum schrittweisen Transport der Rohreifen innerhalb des Strahlenschutzgehäuses auf Greifarmen mit je einer rotierbaren Handhabungseinheit zur Aufnahme eines Rohreifens.

Die Erfindung betrifft ferner ein Verfahren zur Bestrahlung von Rohreifen mittels Elektronenstrahlen einer in einem Strahlenschutzgehäuse befindlichen Elektronenstrahlquelle.

Bei der Reifenherstellung ist es bekannt, Rohreifen vor ihrer Vulkanisation oberflächlich vorzubehandeln. Dabei ist es üblich, die Rohreifen in ein Strahlenschutzgehäuse einzuschleusen und dort die aus einer oder mehreren Kautschukmischung(en) bestehenden Bauteile mittels Elektronenstrahlen oberflächlich vorzuvernetzen, was vor allem die Klebrigkeit der betreffenden Kautschukmischung(en) reduziert. Diese Maßnahme erleichtert das Entformen der Reifen aus der Vulkanisationsform nach erfolgter Vulkanisation.

Eine Vorrichtung und ein Verfahren der eingangs genannten Art sind beispielsweise aus der DE 10 2015 221 511 A1 bekannt. Die Greifarme der Greifeinrichtung sind teleskopartig ein- und ausfahrbar, wodurch der Abstand unterschiedlich dimensionierter Rohreifen gegenüber der Elektronstrahlquelle einstellbar und derart die auf die Oberfläche des Laufstreifens wirkende Strahlendosis veränderbar ist. Durch entsprechende Positionierung der Rohreifen gegenüber der Elektronenstrahlquelle soll daher eine gleichmäßige Vorvernetzung der unterschiedlich dimensionierten Reifen möglich sein. Die Rohreifen werden zunächst mit den Greifarmen zur Elektronenstrahlquelle geschwenkt und durch nachfolgendes Absenken vor dieser positioniert. Nachfolgend wird der Abstand vom Rohreifen zur Elektronenstrahlquelle durch Ein-oder Ausfahren der Greifarme eingestellt und der Rohreifen unter Rotieren bestrahlt.

Etwaige Schwankungen des Abstandes des Rohreifens zur Elektronenstrahlquelle führen daher unweigerlich zu einer Dosisvarianz der Elektronenstrahlung an der Oberfläche der Rohreifen. Dass der Abstand erst unmittelbar im Bereich der Elektronstrahlquelle eingestellt wird, ist hinsichtlich der Zykluszeit bzw. des Durchsatzes durch die Vorrichtung sowie hinsichtlich des Schutzes der Elektronenstrahlquelle vor einer etwaigen Kollision mit dem Rohreifen nicht optimal.

Der Erfindung liegt daher die Aufgabe zugrunde, eine Vorrichtung und ein Verfahren der eingangs genannten Art zu Verfügung zu stellen, welche bzw. welches eine zuverlässige und prozesssichere Einstellung des Abstandes des Rohreifens zur Elektronenstrahlquelle in einer auf die jeweilige Dimension des zu bestrahlenden Rohreifens optimal angepassten Weise ermöglicht.

Was die Vorrichtung betrifft wird die gestellte Aufgabe erfindungsgemäß dadurch gelöst, dass die Greifeinrichtung zumindest vier gleichmäßig sternförmig angeordnete Greifarme aufweist und dass jede Handhabungseinheit auf einem am Greifarm verschieb- und fixierbaren Schlitten angeordnet ist, wobei im Strahlenschutzgehäuse ein verstellbarer Festanschlag vorgesehen ist und wobei jeder Greifarm durch Drehen der Greifeinrichtung in eine Einstellungsposition bringbar ist, in welcher der Schlitten jedes Greifarmes auf den Festanschlag fahrbar ist, dessen Position relativ zu dem in der Einstellungsposition befindlichen Greifarm an die Dimension des zu bestrahlenden Rohreifens angepasst ist.

Was das Verfahren betrifft wird die gestellte Aufgabe erfindungsgemäß gelöst mit folgenden nacheinander ablaufenden Schritten:
a) Einschleusen eines Rohreifens über eine Eingangsschleuse in das Strahlenschutzgehäuse,
b) Ausrichten einer zu einer Greifeinrichtung gehörenden an einem verschiebbaren Schlitten befindlichen Handhabungseinheit gegenüber dem Rohreifen,
c) Aufnahme des Rohreifens von der Handhabungseinheit,
d) Drehen der Greifeinrichtung bis die Handhabungseinheit vor einem gegenüber der Greifeinrichtung in einer an die Reifendimension anpassten Weise verschobenen Festanschlag positioniert ist,
e) Verschieben des Schlittens gegen den und bis zum Festanschlag,
f) Fixieren der Position des Schlittens gegenüber der Greifeinrichtung,
g) Weiterdrehen der Greifeinrichtung bis der Rohreifen vor der Elektronenstahlquelle positioniert ist,
h) Bestrahlen des Rohreifens mit Elektronenstrahlen, wobei die Handhabungseinheit mitsamt Rohreifen rotiert wird,
i) Weiterdrehen der Greifeinrichtung zu einer Abtransporteinrichtung,
j) Abladen des Rohreifens auf die Abtransporteinrichtung,
k) Ausschleusen des Rohreifens und Lösen des fixierten Schlittens.

Gemäß der Erfindung sind die Handhabungseinheiten jeweils an verschiebbaren Schlitten angeordnet. Zur genauen Ausrichtung jeder Handhabungseinheit wird der betreffende Schlitten gegen einen Festanschlag gefahren, welcher abgestimmt auf die jeweilige Reifendimension positioniert worden ist, und nachfolgend fixiert wird. Auf diese Weise sind die Handhabungseinheiten an den Greifarmen in der jeweils gewünschten Position zuverlässig fixiert und es ist der Abstand zwischen dem Rohreifen und der Elektronenstrahlquelle an die jeweilige Dimension des Rohreifens angepasst bevor der Rohreifen vor dem Bestrahlungsfenster positioniert wird. Eine gleichmäßige Bestrahlung unterschiedlich dimensionierter Rohreifen ist derart auf eine besonders prozesssichere Weise möglich. Da mindestens vier Greifarme vorgesehen sind, können im Vergleich zu den bekannten Verfahren und Vorrichtungen mehr Rohreifen "bearbeitet" werden, sodass der Durchsatz erhöht ist.

Gemäß einer bevorzugten Ausführungsvariante ist der Schlitten jedes Greifarmes mittels eines Linearantriebes auf den Festanschlag schieb- und drückbar, wobei der Linearantrieb insbesondere einen Pneumatikzylinder umfasst oder elektromotorisch antreibbar ist.

Bevorzugter Weise ist im Strahlenschutzgehäuse zumindest eine bei der Eingangs- oder der Ausgangsschleuse positionierte Betätigungseinrichtung angeordnet, welche vorzugsweise einen Pneumatikzylinder zum Verschieben des Schlittens in seine Ausgangsposition aufweist. Eine solche Betätigungseinrichtung ist von Vorteil, da dadurch auf separate Betätigungseinrichtungen an jedem Greifarm der Greifeinrichtung verzichtet werden kann.

Für eine besonders sichere Handhabung der Rohreifen innerhalb des Strahlenschutzgehäuses ist es von Vorteil, wenn die Handhabungseinheit Greifelemente zum Erfassen des Rohreifens innen am oben liegenden Wulstbereich aufweist. In diesem Zusammenhang ist es ferner vorteilhaft, wenn die Handhabungseinheit Greifstangen zum Erfassen des Rohreifens innen am unten liegenden Wulstbereich aufweist.

Im Hinblick auf das Verfahren ist es vorteilhaft, wenn unmittelbar vor Schritt c) der Rohreifen von einer Hubeinrichtung angehoben wird. Ein Absenken der Greifeinrichtung bzw. der Handhabungseinheit zur Aufnahme des Rohreifens ist bei dieser Variante daher nicht erforderlich, wodurch die Übergabe des Rohreifens an die Handhabungseinheit besonders prozesssicher erfolgt.

Weitere Maßnahmen gemäß bevorzugter Verfahrensvarianten der Erfindung tragen dazu bei, dass die Rohreifen besonders gleichmäßig mit Elektronen bestrahlt werden. Gemäß einer ersten Variante ist vorgesehen, dass zwischen dem Schritt f) und dem Schritt g) die Handhabungseinheit mitsamt dem Rohreifen in Rotationsbewegung versetzt wird. Gemäß einer zweiten Variante ist vorgesehen, dass in Schritt g) die Handhabungseinheit mitsamt dem Rohreifen vor Erreichen der Elektronenstrahlquelle in Rotationsbewegung versetzt wird. Bei einer dritten Variante wird zwischen dem Schritt f) und dem Schritt g) die Handhabungseinheit mitsamt dem Rohreifen in eine Beschleunigungsposition geschwenkt, in welcher die Handhabungseinheit mitsamt Rohreifen auf die Solldrehzahl beschleunigt wird.

Für das Abladen des Rohreifens gemäß Schritt j) ist es von Vorteil, wenn zwischen dem Schritt h) und dem Schritt j) die Rotationsbewegung der Handhabungseinheit abgebremst oder wenn zwischen dem Schritt h) und dem Schritt i) die Handhabungseinheit mitsamt dem Rohreifen in eine Verzögerungsposition geschwenkt wird, in welcher die Rotationsbewegung der Handhabungseinheit ausläuft und/oder abgebremst wird.

Gemäß einer weiteren bevorzugten Verfahrensvariante wird zwischen dem Schritt i) und dem Schritt j) der gemäß Schritt b) ausgerichtete Schlitten zurück in seine Ausgangsposition geschoben. Die bestrahlten Rohreifen werden dadurch vor dem Abladen ausgerichtet, sodass diese nachfolgend zentriert auf einer Abtransporteinrichtung abgeladen werden. Dies kann beispielsweise für etwaige nachgeschaltete Verfahren von Vorteil sein.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine erfindungsgemäße Vorrichtung und
Fig. 2 eine vereinfachte Schnittdarstellung entlang der Linie II-II der Fig. 1.

Die Erfindung befasst sich mit einer Vorrichtung und einem Verfahren zur Bereitstellung von Rohreifen mit zumindest einem durch Elektronenstrahlen vorvernetzten, zumindest eine Kautschukmischung aufweisenden Reifenbauteil.

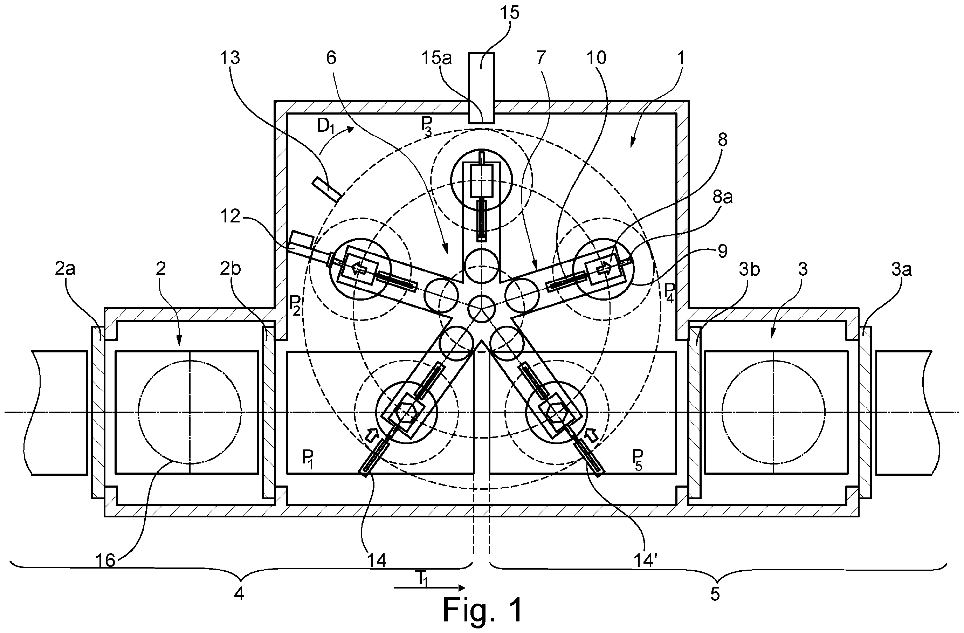

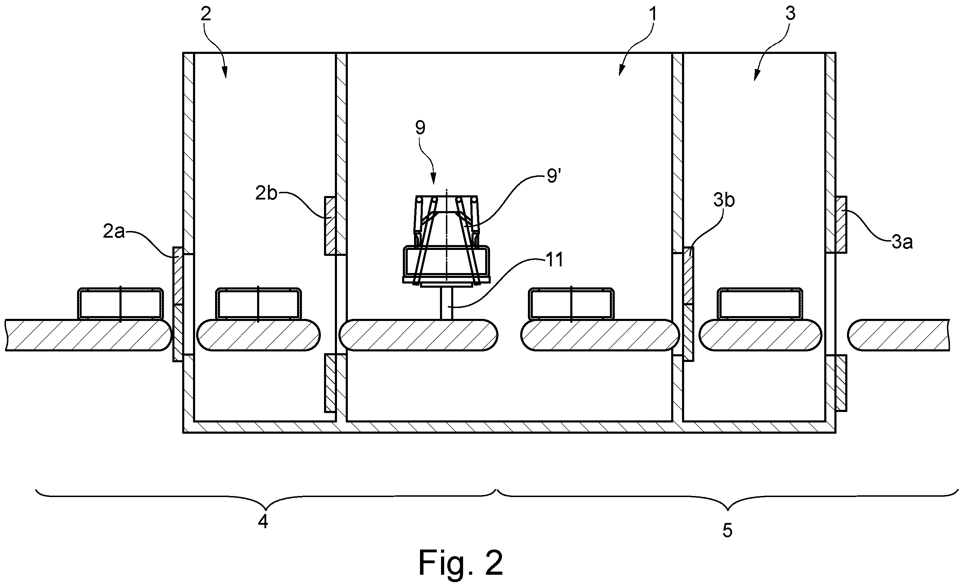

Fig. 1 und Fig. 2 zeigen jeweils ein Strahlenschutzgehäuse 1, eine Eingangsschleuse 2, eine Ausgangsschleuse 3, einen Teilbereich eines Zubringers 4 und einen Teilbereich einer Abtransporteinrichtung 5. Der Zubringer 4 und die Abtransporteinrichtung 5 weisen beim gezeigten Ausführungsbeispiel eine übereinstimmende Transportrichtung auf, welche in Fig. 1 durch einen Pfeil T₁ gekennzeichnet ist.

Das Strahlenschutzgehäuse 1 ist in Draufsicht vorzugsweise im Wesentlichen quadratisch ausgeführt. Die Eingangsschleuse 2 und die Ausgangsschleuse 3 schließen beim gezeigten Ausführungsbeispiel derart an einander gegenüberliegenden Seiten sowie randseitig an das Strahlenschutzgehäuse 1 an, dass die Ausgangsschleuse 3 der Eingangsschleuse 2 gegenüberliegt. Die Eingangsschleuse 2 weist ein äußeres Schleusentor 2a und zum Strahlenschutzgehäuse 1 ein inneres Schleusentor 2b auf. Auf analoge Weise weist die Ausgangsschleuse 3 ein äußeres Schleusentor 3a und zum Strahlenschutzgehäuse 1 ein inneres Schleusentor 3b auf. Die Schleusentore 2a, 2b, 3a, 3b sind jeweils in vertikaler oder in horizontaler Richtung verschiebbar.

Der Zubringer 4 reicht von einem Bereich außerhalb des Strahlenschutzgehäuses 1 über die Eingangsschleuse 2 in das Strahlenschutzgehäuses 1 hinein. Die Abtransporteinrichtung 5 reicht von einem Bereich außerhalb des Strahlenschutzgehäuses 1 über die Ausgangsschleuse 3 in das Strahlenschutzgehäuses 1 hinein und endet dort knapp vor dem Ende des Zubringers 4. Der Zubringer 4 und die Abtransporteinrichtung 5 sind jeweils mehrteilig ausgeführt, beispielsweise aus mehreren Förderbändern und/oder Rollenförderern. Die innerhalb der Eingangsschleuse 2 und der Ausgangsschleuse 3 sowie die innerhalb des Strahlenschutzgehäuses 1 befindlichen Abschnitte des Zubringers 4 bzw. der Abtransporteinrichtung 5 bestehen vorzugsweise aus Edelstahl.

Im Strahlenschutzgehäuse 1 ist insbesondere mittig eine Greifeinrichtung 6 angeordnet, welche beim gezeigten Ausführungsbeispiel fünf in Draufsicht gleichmäßig sternförmig zueinander orientierte und daher in Draufsicht jeweils um 72° zueinander versetzte Greifarme 7 aufweist. Mittels eines nicht gezeigten Antriebes ist die Greifeinrichtung 6 um eine vertikale Achse drehbar, wobei die Drehbewegung beim gezeigten Ausführungsbeispiel, wie in Fig. 1 durch den Pfeil D₁ angedeutet ist, in Draufsicht im Uhrzeigersinn erfolgt.

Die Greifeinrichtung 6 hängt entweder von der Decke des Strahlenschutzgehäuses 1 oder steht am Boden der Strahlenschutzgehäuses 1 auf. Am äußeren Ende der Greifarme 7 ist jeweils an einem Schlitten 8 eine spreiz- und rotierbare Handhabungseinheit 9 angeordnet. In Fig. 2 ist von der Greifeinrichtung 6 lediglich eine solche Handhabungseinheit 9 gezeigt. Mit einer Handhabungseinheit 9 ist ein Rohreifen 16 (Fig. 1) innen am oben liegenden Wulstbereich erfassbar, wobei die Handhabungseinheiten 9 beim gezeigten Ausführungsbeispiel ferner jeweils Greifstangen 9' aufweisen, mittels welchen die Rohreifen 16 zusätzlich innen am unten liegenden Wulstbereich erfassbar sind.

Jeder Schlitten 8 ist am zugehörigen Greifarm 7 entlang einer in den Figuren nicht gezeigten Linearführung, insbesondere entlang einer Gleitführung, derart verschiebbar, dass die Entfernung jedes Schlittens 8 zur Drehachse der Greifeinrichtung 6 veränderbar ist. Wie Fig. 1 zeigt, weist jeder Schlitten 8 ein Stoßelement 8a auf, welches beim gezeigten Ausführungsbeispiel das äußere Ende des jeweiligen Greifarmes 7 ein Stück überragt. Die Stoßelemente 8a können ferner auch auf den Schlitten 8 oder am Schlitten 8 knapp unterhalb des jeweiligen Greifarmes 7 angeordnet sein. Hinter jedem Schlitten 8 ist am zugehörigen Greifarm 7 ein Pneumatikzylinder 10 positioniert, mittels welchem der jeweilige Schlitten 8 entlang seiner Linearführung nach außen verschiebbar ist. Die Druckluftversorgung der Pneumatikzylinder 10 wird vorzugsweise mittels eines an der Greifeinrichtung 6 befindlichen Drehüberträgers bewerkstelligt. Anstelle der Pneumatikzylinder 10 können auch elektrisch angetriebene Linearantriebe vorgesehen sein. Mittels nicht gezeigter Klemmelemente oder dergleichen sind die Schlitten 8 unabhängig voneinander entlang ihrer Linearführungen fixier- und lösbar.

Ferner sind im Strahlenschutzgehäuse 1 eine Hubeinrichtung 11 (Fig. 2), ein Festanschlag 12, eine Schaltfahne 13 und zwei linear verschiebbare externe Pneumatikzylinder 14, 14' positioniert. Die Hubeinrichtung 11 umfasst vorzugsweise ebenfalls einen Pneumatikzylinder und ist hinter dem inneren Schleusentor 2b der Eingangsschleuse 2 am Zubringer 4, insbesondere unterhalb des Zubringers 4, angeordnet.

Der externe Pneumatikzylinder 14 befindet sich in der Nähe des inneren Schleusentores 2b der Eingangsschleuse 2 oberhalb des Zubringer 4, der externe Pneumatikzylinder 14' befindet sich in der Nähe des inneren Schleusentores 3b der Ausgangsschleuse 3. Die Lage und Ausrichtung der externen Pneumatikzylinder 14, 14' wird nachfolgend noch genauer erläutert. In das Strahlenschutzgehäuse 1 ragt ferner eine Elektronenstrahlquelle 15 hinein, welche ein im Strahlenschutzgehäuse 1 befindliches Bestrahlungsfenster 15a aufweist.

Durch schrittweises Drehen der Greifeinrichtung 6, beim gezeigten Ausführungsbeispiel durch schrittweises Drehen um 72°, sind die Handhabungseinheiten 9 ausgehend von einer Beladeposition P₁ nacheinander in eine Einstellungsposition P₂, in eine Bestrahlungsposition P₃, in eine Verzögerungsposition P₄, in eine Abwurfposition P₅ und von dieser wieder zurück in die Beladeposition P₁ bringbar. Eine in der Beladeposition P₁ befindliche Handhabungseinheit 9 ist mittig über der Hubeinrichtung 11 und damit beim Zubringer 4 positioniert. Die jeweilige in der Beladeposition P₁ befindliche Handhabungseinheit 9 ist ferner derart vor dem externen Pneumatikzylinder 14 positioniert, dass dieser auf das Stoßelement 8a des jeweiligen Schlittens 8 drückbar ist. Die jeweils gerade in der Einstellungsposition P₂ befindliche Handhabungseinheit 9 ist gegenüber dem Festanschlag 12 ausgerichtet, sodass das Stoßelement 8a des jeweiligen Schlittens 8 auf den Festanschlag 12 drückbar ist. Der Festanschlag 12 ist derart linear verschiebbar, dass sein Abstand zu einem in der Einstellungsposition P₂ befindlichen Greifarm 7 verstellbar ist. In der Bestrahlungsposition P₃ ist ein von der Handhabungseinheit 9 gehaltener Rohreifen 16 vor der Elektronenstrahlquelle 15 positioniert.

Die Schaltfahne 13 befindet sich bezogen auf die Drehrichtung der Greifeinrichtung 6 zwischen dem Festanschlag 12 (Einstellungsposition P₂) und der Elektronenstrahlquelle 15 (Bestrahlungsposition P₃). Die Schaltfahne 13 weist einen strahlungsgeschützten, beispielsweise eingekapselten, elektromechanischen Sicherheitsschalter, dessen Funktion nachfolgend noch erläutert wird, und ein wippend gelagertes Edelstahlblech zum Betätigen des Sicherheitsschalters auf.

In der Abwurfposition P₅ befindet sich die jeweilige Handhabungseinheit 9 oberhalb der Abtransporteinrichtung 5, wobei auf das Stoßelement 8a des jeweiligen Schlittens 8 der Pneumatikzylinder 14' drückbar ist.

Im Nachfolgenden wird der Ablauf des erfindungsgemäßen Verfahrens erläutert.

Zu Beginn sind sowohl die Eingangsschleuse 2 als auch die Ausgangsschleuse 3 beidseitig durch ihre Schleusentore 2a, 2b, 3a, 3b verschlossen. Die Rohreifen 16 werden waagrecht liegend und einzeln durch Öffnen und Schließen der Schleusentore 2a, 2b über die Eingangsschleuse 2 in die Bestrahlungskammer 1 eingebracht. Nacheinander über die Eingangsschleuse 2 eingeschleuste Rohreifen 16 werden mittels einer im Strahlenschutzgehäuse 1 beim Zubringer 4 angeordneten in den Figuren nicht gezeigten Anschlagstelle gegenüber der Hubeinrichtung 11 ausgerichtet. Der externe Pneumatikzylinder 14 wird betätigt und trifft auf das Stoßelement 8a des Schlitten 8 jenes Greifarmes 7, dessen Handhabungseinheit 9 in der Beladeposition P₁ ist, sodass der Schlitten 8 und damit die an ihm fixierte Handhabungseinheit 9 entlang der Schienenführung nach innen fahren, wodurch die Handhabungseinheit 9 in eine definierte Ausgangsstellung gegenüber der Hubeinrichtung 11 gebracht wird. Anschließend hebt die Hubeinrichtung 11 den Rohreifen 16 an und die Handhabungseinheit 9 erfasst den Rohreifen 16 innen am oben liegenden Wulstbereich. Etwaige Greifstangen 9' erfassen den Rohreifen 16 von innen am unten liegenden Wulstbereich. Die Hubeinrichtung 11 wird wieder abgesenkt. Die Greifeinrichtung 6 wird gedreht, wodurch die den Rohreifen 16 haltende Handhabungseinheit 9 in die Einstellungsposition P₂ und damit vor den Festanschlag 12 gebracht wird. Der Festanschlag 12 ist bereits in einem auf die Reifendimension des Rohreifens 16 abgestimmten Ausmaß gegenüber dem Greifarm 7 verschoben und fixiert worden. Mittels des Pneumatikzylinders 10 werden der Schlitten 8 und damit die Handhabungseinheit 9 nach außen geschoben, sodass das Stoßelement 8a auf den Festanschlag 12 auftrifft, wodurch die Handhabungseinheit 9 mitsamt gehaltenem Rohreifen 16 für die nachfolgende Elektronenbestrahlung ausgerichtet werden. Der Festanschlag 12 wird dabei jeweils derart verfahren, dass der Schlitten 8 durch Betätigen des Pneumatikzylinders 10 derart verschoben wird, dass Rohreifen 16 unterschiedlicher Dimensionen nachfolgend in übereinstimmendem bzw. in im Wesentlichen übereinstimmenden Abständen vor dem Bestrahlungsfenster 15a der Elektronenstrahlquelle 15 positioniert werden. Der verschobene Schlitten 8 wird anschließend fixiert. Nachfolgend wird die Handhabungseinheit 9 mitsamt gehaltenem Rohreifen 16 in Rotationsbewegung versetzt und anschließend wird die Greifeinrichtung 6 weitergedreht, sodass - bei entsprechend verschobenem und fixiertem Schlitten 8 - zunächst der Rohreifen 16 an der Schaltfahne 13 vorbei bewegt wird und nachfolgend die Handhabungseinheit 9 in die Bestrahlungsposition P₃ und damit der Rohreifen 16 vor dem Bestrahlungsfenster 15a positioniert werden. Alternativ können die Handhabungseinheit 9 und damit der Rohreifen 16 auch erst während der Schwenkbewegung zur Bestrahlungsposition P₃ in Rotationsbewegung versetzt werden. Bevorzugter Weise wird die Handhabungseinheit 9 mit dem Rohreifen 16 derart in Rotationsbewegung versetzt, dass sie bei Erreichen der Bestrahlungsposition P₃ mit der vorgesehenen Drehzahl rotiert, wodurch der Rohreifen 16 nachfolgend besonders gleichmäßig mit Elektronen bestrahlt und daher auch besonders gleichmäßig vorvernetzt wird.

Sollte sich der Schlitten 8 am Greifarm 7 weiter außen befinden, als es der zuvor in der Einstellungsposition P₂ durchgeführten Ausrichtung entspricht, beispielsweise weil der Schlitten 8 nach der Ausrichtung fehlerhaft fixiert wurde, kontaktiert der Rohreifen 16 beim Schwenkvorgang der Greifeinrichtung 6 die Schaltfahne 13 und das Verfahren wird gestoppt. Eine etwaige Beschädigung des Bestrahlungsfensters 15a durch Kollision mit dem Rohreifen 16 wird derart zuverlässig verhindert.

Nach Abschluss der Bestrahlung erfolgt eine weitere Drehbewegung der Greifeinrichtung 6, wobei die Handhabungseinheit 9 mit dem vorvernetzten Rohreifen 16 in die Verzögerungsposition P₄ gebracht werden, in welcher die Rotationsbewegung der Handhabungseinheit 9 langsam ausläuft und/oder abgebremst wird und schlussendlich stoppt. Nachfolgend wird die Greifeinrichtung 6 weitergedreht, sodass die Handhabungseinheit 9 mit dem vorvernetzten Rohreifen 16 in die Abwurfposition P₅ oberhalb der Abtransporteinrichtung 3 gebracht wird. Der externe Pneumatikzylinder 14' wird betätigt und trifft auf das Stoßelement 8a des Schlittens 8, welcher derart wieder zurück in seine Ausgangsposition gebracht wird, wobei der vorvernetzte Rohreifen 16 im Wesentlich mittig gegenüber der Abtransporteinrichtung 3 ausgerichtet wird. Anschließend gibt die Handhabungseinheit 9 den Rohreifen 16 frei, welcher auf der Abtransporteinrichtung 5 abgeladen und über die Ausgangsschleuse 3 abtransportiert wird.

Während des gesamten Verfahrens werden die Schleusentore 2a, 2b, 3a, 3b derart verfahren, dass das Strahlenschutzgehäuse 1 zur Außenumgebung abgeschottet ist. Es ist daher jeweils zumindest eines der beiden Schleusentore 2a, 2b, 3a, 3b der Eingangsschleuse 2 und der Ausgangsschleuse 3 geschlossen. Die beschriebenen Verfahrensschritte werden vorzugsweise mit mehreren Rohreifen 16 gleichzeitig ausgeführt, insbesondere derart, dass von sämtlichen Handhabungseinheiten 9 fortlaufend Rohreifen 16 aufgenommen werden bzw. sind.

Gemäß einer ersten weiteren Ausführungsvariante wird auf die Verzögerungsposition P₄ verzichtet. Bei dieser Variante laufen die Rotationsbewegungen der Handhabungseinheit 9 und des Rohreifens 16 in der Abwurfposition P₅ aus, bevor der vorvernetzte Rohreifen 16 abgelegt wird. Die zugehörige Greifeinrichtung weist vier Greifarme 7 auf.

Gemäß einer zweiten weiteren Ausführungsvariante werden die Rohreifen 16 zwischen der Einstellungsposition P₂ und der Bestrahlungsposition P₃ in eine vorzugsweise vor der Schaltfahne 13 befindliche Beschleunigungsposition gebracht, in welcher die Handhabungseinheit 9 und die Rohreifen 16 auf die gewünschte Solldrehzahl für die nachfolgende Elektronenbestrahlung beschleunigt werden. Bei dieser Ausführungsvariante weist die Greifeinrichtung sechs Greifarme 7 auf.

Ferner ist es möglich die erste weitere Ausführungsvariante mit der zweiten weiteren Ausführungsvariante entsprechend zu kombinieren, wobei die zugehörige Greifeinrichtung fünf Greifarme 7 aufweist.

Die Positionierung der einzelnen Vorrichtungsbauteile ist an die jeweilige Ausführungsvariante anzupassen.

Ein vollautomatischer Ablauf des erfindungsgemäßen Verfahrens ist durch eine entsprechende Rechnersteuerung sichergestellt. Die dazu erforderliche Hard- und Software sind nicht Gegenstand der Erfindung.

### Bezugszeichenliste

- 1: Strahlenschutzgehäuse
- 2: Eingangsschleuse
- 2a: äußeres Schleusentor
- 2b: inneres Schleusentor
- 3: Ausgangsschleuse
- 3a: äußeres Schleusentor
- 3b: inneres Schleusentor
- 4: Zubringer
- 5: Abtransporteinrichtung
- 6: Greifeinrichtung
- 7: Greifarm
- 8: Schlitten
- 8a: Stoßelement
- 9: Handhabungseinheit
- 9': Greifstangen
- 10: Pneumatikzylinder
- 11: Hubeinrichtung
- 12: Festanschlag
- 13: Schaltfahne
- 14, 14': externer Pneumatikzylinder
- 15: Elektronenstrahlquelle
- 15a: Bestrahlungsfenster
- 16: Rohreifen
- D₁, T₁: Pfeil
- P₁: Beladeposition
- P₂: Einstellungsposition
- P₃: Bestrahlungsposition
- P₄: Verzögerungsposition
- P₅: Abwurfposition

## Patentansprüche

1. Vorrichtung zur Bestrahlung von Rohreifen (16) mit Elektronenstrahlen, umfassend
- ein Strahlenschutzgehäuse (1),
- eine Elektronenstrahlquelle (15) mit einem im Strahlenschutzgehäuse (1) befindlichen Bestrahlungsfenster (15a),
- eine Eingangsschleuse (2) und eine Ausgangsschleuse (3), welche Schleusen jeweils an das Strahlenschutzgehäuse (1) angrenzen,
- einen Zubringer (4) zum Transport der Rohreifen (16) durch die Eingangsschleuse (2) in das Strahlenschutzgehäuse (1),
- eine Abtransporteinrichtung (5) zum Abtransport bestrahlter Rohreifen (16) aus dem Strahlenschutzgehäuse (1) durch die Ausgangsschleuse (3),
- eine im Strahlenschutzgehäuse (1) positionierte drehbare Greifeinrichtung (6) zum schrittweisen Transport der Rohreifen (16) innerhalb des Strahlenschutzgehäuses (1) auf Greifarmen (7) mit je einer rotierbaren Handhabungseinheit (9) zur Aufnahme eines Rohreifens (16),
**dadurch gekennzeichnet,**
**dass** die Greifeinrichtung (6) zumindest vier gleichmäßig sternförmig angeordnete Greifarme (7) aufweist und dass jede Handhabungseinheit (9) auf einem am Greifarm (7) verschieb- und fixierbaren Schlitten (8) angeordnet ist, wobei im Strahlenschutzgehäuse (1) ein verstellbarer Festanschlag (12) vorgesehen ist und wobei jeder Greifarm (7) durch Drehen der Greifeinrichtung (6) in eine Einstellungsposition (P₂) bringbar ist, in welcher der Schlitten (8) jedes Greifarmes (7) auf den Festanschlag (12) fahrbar ist, dessen Position relativ zu dem in der Einstellungsposition (P₂) befindlichen Greifarm (7) an die Dimension des zu bestrahlenden Rohreifens (16) angepasst ist.

2. Vorrichtung nach Anspruch 1, **dadurch gekennzeichnet, dass** der Schlitten (8) jedes Greifarmes (7) mittels eines Linearantriebes auf den Festanschlag (12) schieb- und drückbar ist.

3. Vorrichtung nach Anspruch 2, **dadurch gekennzeichnet, dass** der Linearantrieb einen Pneumatikzylinder umfasst.

4. Vorrichtung nach Anspruch 2 oder 3, **dadurch gekennzeichnet, dass** der Linearantrieb elektromotorisch antreibbar ist.

5. Vorrichtung nach einem der Ansprüche 2 bis 4, **dadurch gekennzeichnet, dass** im Strahlenschutzgehäuse (1) zumindest eine bei der Eingangs (2)- oder der Ausgangsschleuse (3) positionierte Betätigungseinrichtung angeordnet ist, welche vorzugsweise einen Pneumatikzylinder (14, 14') zum Verschieben des Schlittens (8) in seine Ausgangsposition aufweist.

6. Vorrichtung nach einem der Ansprüche 1 bis 5, **dadurch gekennzeichnet, dass** die Handhabungseinheit (9) Greifelemente zum Erfassen des Rohreifens (16) innen am oben liegenden Wulstbereich aufweist.

7. Vorrichtung nach einem der Ansprüche 1 bis 6, **dadurch gekennzeichnet, dass** die Handhabungseinheit (9) Greifstangen (9') zum Erfassen des Rohreifens (16) innen am unten liegenden Wulstbereich aufweist.

8. Verfahren zur Bestrahlung von Rohreifen (16) mittels Elektronenstrahlen einer in einem Strahlenschutzgehäuse (1) befindlichen Elektronenstrahlquelle (15) mit folgenden nacheinander ablaufenden Schritten:
a) Einschleusen eines Rohreifens (16) über eine Eingangsschleuse (2) in das Strahlenschutzgehäuse (1),
b) Ausrichten einer zu einer Greifeinrichtung (6) gehörenden an einem verschiebbaren Schlitten (8) befindlichen Handhabungseinheit (9) gegenüber dem Rohreifen (16),
c) Aufnahme des Rohreifens (16) von der Handhabungseinheit (9),
d) Drehen der Greifeinrichtung (6) bis die Handhabungseinheit (9) vor einem gegenüber der Greifeinrichtung (6) in einer an die Reifendimension anpassten Weise verschobenen Festanschlag (12) positioniert ist,
e) Verschieben des Schlittens (8) gegen den und bis zum Festanschlag (12),
f) Fixieren der Position des Schlittens (8) gegenüber der Greifeinrichtung (6),
g) Weiterdrehen der Greifeinrichtung (6) bis der Rohreifen (16) vor der Elektronenstahlquelle (15) positioniert ist,
h) Bestrahlen des Rohreifens (16) mit Elektronenstrahlen, wobei die Handhabungseinheit (9) mitsamt Rohreifen (16) rotiert wird,
i) Weiterdrehen der Greifeinrichtung (6) zu einer Abtransporteinrichtung (5),
j) Abladen des Rohreifens (16) auf die Abtransporteinrichtung (5),
k) Ausschleusen des Rohreifens (16).

9. Verfahren nach Anspruch 8, **dadurch gekennzeichnet, dass** unmittelbar vor Schritt c) der Rohreifen (16) von einer Hubeinrichtung (11) angehoben wird.

10. Verfahren nach Anspruch 8 oder 9, **dadurch gekennzeichnet, dass** zwischen dem Schritt f) und dem Schritt g) die Handhabungseinheit (9) mitsamt dem Rohreifen (16) in Rotationsbewegung versetzt wird.

11. Verfahren nach Anspruch 8 oder 9, **dadurch gekennzeichnet, dass** in Schritt g) die Handhabungseinheit (9) mitsamt dem Rohreifen (16) vor Erreichen der Elektronenstrahlquelle (15) in Rotationsbewegung versetzt wird.

12. Verfahren nach Anspruch 8 oder 9, **dadurch gekennzeichnet, dass** zwischen dem Schritt f) und dem Schritt g) die Handhabungseinheit (9) mitsamt dem Rohreifen (16) in eine Beschleunigungsposition (P₃) geschwenkt wird, in welcher die Handhabungseinheit (9) mitsamt dem Rohreifen (16) auf die Solldrehzahl beschleunigt wird.

13. Verfahren nach einem der Ansprüche 8 bis 12, **dadurch gekennzeichnet, dass** zwischen dem Schritt h) und dem Schritt j) die Rotationsbewegung der Handhabungseinheit (9) abgebremst wird.

14. Verfahren nach einem der Ansprüche 8 bis 12, **dadurch gekennzeichnet, dass** zwischen dem Schritt h) und dem Schritt i) die Handhabungseinheit (9) mitsamt dem Rohreifen (16) in eine Verzögerungsposition (P₄) geschwenkt wird, in welcher die Rotationsbewegung der Handhabungseinheit (9) ausläuft und/oder abgebremst wird.

15. Verfahren nach einem der Ansprüche 8 bis 14, **dadurch gekennzeichnet, dass** zwischen dem Schritt i) und dem Schritt j) der gemäß Schritt b) ausgerichtete Schlitten (8) zurück in seine Ausgangsposition geschoben wird.

## Claims

1. Device for irradiating green tyres (16) with electron beams, comprising
- a radiation protection housing (1),
- an electron beam source (15) with an irradiating window (15a) located in the radiation protection housing (1),
- an input lock (2) and an output lock (3), which locks respectively adjoin the radiation protection housing (1),
- a feeder (4) for transporting the green tyres (16) through the input lock (2) into the radiation protection housing (1),
- a transporting-away device (5) for transporting away irradiated green tyres (16) out of the radiation protection housing (1) through the output lock (3),
- a rotatable gripping device (6), which is positioned in the radiation protection housing (1) and is intended for transporting the green tyres (16) step by step within the radiation protection housing (1) on gripping arms (7) each with a rotatable handling unit (9) for receiving a green tyre (16),
**characterized**
**in that** the gripping device (6) has at least four gripping arms (7) arranged uniformly in a star-shaped manner and in that each handling unit (9) is arranged on a slide (8) that can be displaced and fixed on the gripping arm (7), wherein an adjustable fixed stop (12) is provided in the radiation protection housing (1) and wherein, by turning the gripping device (6), each gripping arm (7) can be brought into a setting position (P₂), in which the slide (8) of each gripping arm (7) can be moved up to the fixed stop (12), the position of which is adapted relative to the gripping arm (7) located in the setting position (P₂) to the dimension of the green tyre (16) to be irradiated.

2. Device according to Claim 1, **characterized in that** the slide (8) of each gripping arm (7) can be pushed and pressed against the fixed stop (12) by means of a linear drive.

3. Device according to Claim 2, **characterized in that** the linear drive comprises a pneumatic cylinder.

4. Device according to Claim 2 or 3, **characterized in that** the linear drive can be driven electromotively.

5. Device according to one of Claims 2 to 4, **characterized in that** at least one actuating device, which is positioned at the input lock (2) or the output lock (3) and preferably has a pneumatic cylinder (14, 14') for displacing the slide (8) into its starting position, is arranged in the radiation protection housing (1).

6. Device according to one of Claims 1 to 5, **characterized in that** the handling unit (9) has gripping elements for grasping the green tyre (16) on the inside at the upper-lying bead region.

7. Device according to one of Claims 1 to 6, **characterized in that** the handling unit (9) has gripping rods (9') for grasping the green tyre (16) on the inside at the lower-lying bead region.

8. Method for irradiating green tyres (16) by means of electron beams of an electron beam source (15) located in a radiation protection housing (1), comprising the following successive steps;
a) transferring a green tyre (16) into the radiation protection housing (1) via an input lock (2),
b) aligning a handling unit (9) that belongs to a gripping device (6) and is located on a displaceable slide (8) with respect to the green tyre (16),
c) receiving the green tyre (16) by the handling unit (9),
d) turning the gripping device (6) until the handling unit (9) is positioned in front of a fixed stop (12) displaced with respect to the gripping device (6) in a way adapted to the tyre dimension,
e) displacing the slide (8) towards and up to the fixed stop (12),
f) fixing the position of the slide (8) with respect to the gripping device (6),
g) turning the gripping device (6) further until the green tyre (16) is positioned in front of the electron beam source (15),
h) irradiating the green tyre (16) with electron beams, the handling unit (9) being rotated together with the green tyre (16),
i) turning the gripping device (6) further to a transporting-away device (5),
j) unloading the green tyre (16) onto the transporting-away device (5),
k) transferring the green tyre (16) out.

9. Method according to Claim 8, **characterized in that**, directly before step c), the green tyre (16) is raised by a lifting device (11).

10. Method according to Claim 8 or 9, **characterized in that**, between step f) and step g), the handling unit (9) is set in rotational motion together with the green tyre (16).

11. Method according to Claim 8 or 9, **characterized in that**, in step g), the handling unit (9) is set in rotational motion together with the green tyre (16) before reaching the electron beam source (15).

12. Method according to Claim 8 or 9, **characterized in that**, between step f) and step g), the handling unit (9) is pivoted together with the green tyre (16) into an accelerating position (P₃), in which the handling unit (9) is accelerated together with the green tyre (16) to the desired rotational speed.

13. Method according to one of Claims 8 to 12, **characterized in that**, between step h) and step j), the rotational motion of the handling unit (9) is braked.

14. Method according to one of Claims 8 to 12, **characterized in that**, between step h) and step i), the handling unit (9) is pivoted together with the green tyre (16) into a decelerating position (P₄), in which the rotational motion of the handling unit (9) runs down and/or is braked.

15. Method according to one of Claims 8 to 14, **characterized in that**, between step i) and step j), the slide (8) aligned according to step b) is pushed back into its starting position.

## Revendications

1. Arrangement pour irradier des pneus bruts (16) avec un faisceau d'électrons, comprenant
- un boîtier de protection contre les rayonnements (1),
- une source de faisceau d'électrons (15) pourvue d'une fenêtre d'irradiation (15a) qui se trouve dans le boîtier de protection contre les rayonnements (1),
- un sas d'entrée (2) et un sas de sortie (3), lesdits sas étant respectivement adjacents au boîtier de protection contre les rayonnements (1),
- un organe d'amenée (4) destiné à transporter les pneus bruts (16) à travers le sas d'entrée (2) dans le boîtier de protection contre les rayonnements (1),
- un dispositif d'enlèvement (5) destiné à transporter les pneus bruts (16) irradiés hors du boîtier de protection contre les rayonnements (1) à travers le sas de sortie (3),
- un dispositif de préhension (6) tournant positionné dans le boîtier de protection contre les rayonnements (1) et servant au transport pas à pas des pneus bruts (16) à l'intérieur du boîtier de protection contre les rayonnements (1) sur des bras de préhension (7) respectivement pourvus d'une unité de manipulation (9) rotative destinés à accueillir un pneu brut (16),
**caractérisé en ce**
**que** le dispositif de préhension (6) possède au moins quatre bras de préhension (7) disposés uniformément en forme d'étoile et **en ce que** chaque unité de manipulation (9) est disposée sur un chariot (8) coulissant et pouvant être calé sur le bras de préhension (7), une butée fixe (12) positionnable se trouvant dans le boîtier de protection contre les rayonnements (1) et chaque bras de préhension (7) pouvant, en faisant tourner le dispositif de préhension (6), être amené dans une position de réglage (P₂) dans laquelle le chariot (8) de chaque bras de préhension (7) peut être déplacé sur la butée fixe (12), dont la position par rapport au bras de préhension (7) qui se trouve dans la position de réglage (P₂) est adaptée à la dimension du pneu brut (16) à irradier.

2. Arrangement selon la revendication 1, **caractérisé en ce que** le chariot (8) de chaque bras de préhension (7) peut être coulissé et poussé sur la butée fixe (12) au moyen d'un entraînement linéaire.

3. Arrangement selon la revendication 2, **caractérisé en ce que** l'entraînement linéaire comprend un vérin pneumatique.

4. Arrangement selon la revendication 2 ou 3, **caractérisé en ce que** l'entraînement linéaire peut être entraîné de manière électromotorisée.

5. Arrangement selon l'une des revendications 2 à 4, **caractérisé en ce qu'**au moins un dispositif d'actionnement positionné au niveau du sas d'entrée (2) ou du sas de sortie (3) est disposé dans le boîtier de protection contre les rayonnements (1), lequel possède de préférence un vérin pneumatique (14, 14') servant à coulisser le chariot (8) dans sa position initiale.

6. Arrangement selon l'une des revendications 1 à 5, **caractérisé en ce que** l'unité de manipulation (9) possède des éléments de préhension destinés à saisir le pneu brut (16) à l'intérieur au niveau de la zone du talon qui se trouve en haut.

7. Arrangement selon l'une des revendications 1 à 6, **caractérisé en ce que** l'unité de manipulation (9) possède des tiges de préhension (9') destinées à saisir le pneu brut (16) à l'intérieur au niveau de la zone du talon qui se trouve en bas.

8. Procédé pour irradier des pneus bruts (16) au moyen d'un faisceau d'électrons d'une source de faisceau d'électrons (15) qui se trouve dans un boîtier de protection contre les rayonnements (1), comprenant les étapes suivantes exécutées successivement :
a) entrée par sas d'un pneu brut (16) dans le boîtier de protection contre les rayonnements (1) par le biais d'un sas d'entrée (2),
b) orientation d'une unité de manipulation (9) faisant partie d'un dispositif de préhension (6) et disposée sur un chariot coulissant (8) par rapport au pneu brut (16),
c) prise en charge du pneu brut (16) par l'unité de manipulation (9),
d) rotation du dispositif de préhension (6) jusqu'à ce que l'unité de manipulation (9) soit positionnée devant une butée fixe (12) coulissée par rapport au dispositif de préhension (6) d'une manière adaptée à la taille du pneu,
e) coulissement du chariot (8) contre et jusqu'à la butée fixe (12),
f) calage de la position du chariot (8) par rapport au dispositif de préhension (6),
g) poursuite de la rotation du dispositif de préhension (6) jusqu'à ce que le pneu brut (16) soit positionné devant la source de faisceau d'électrons (15),
h) irradiation du pneu brut (16) avec un faisceau d'électrons, l'unité de manipulation (9) étant mise en rotation conjointement avec le pneu brut (16),
i) poursuite de la rotation du dispositif de préhension (6) jusqu'à un dispositif d'enlèvement (5),
j) déchargement du pneu brut (16) sur le dispositif d'enlèvement (5),
k) sortie par sas du pneu brut (16).

9. Procédé selon la revendication 8, **caractérisé en ce qu'**immédiatement avant l'étape c), le pneu brut (16) est soulevé par un dispositif de levage (11).

10. Procédé selon la revendication 8 ou 9, **caractérisé en ce qu'**entre l'étape f) et l'étape g), l'unité de manipulation (9) est amenée dans un mouvement de rotation conjointement avec le pneu brut (16).

11. Procédé selon la revendication 8 ou 9, **caractérisé en ce qu'**à l'étape g), l'unité de manipulation (9) est amenée dans un mouvement de rotation conjointement avec le pneu brut (16) avant d'atteindre la source de faisceau d'électrons (15).

12. Procédé selon la revendication 8 ou 9, **caractérisé en ce qu'**entre l'étape f) et l'étape g), l'unité de manipulation (9) conjointement avec le pneu brut (16) est pivotée dans une position d'accélération (P₃) dans laquelle l'unité de manipulation (9) conjointement avec le pneu brut (16) est accélérée à la vitesse de rotation de consigne.

13. Procédé selon l'une des revendications 8 à 12, **caractérisé en ce qu'**entre l'étape h) et l'étape j), le mouvement de rotation de l'unité de manipulation (9) est freiné.

14. Procédé selon l'une des revendications 8 à 12, **caractérisé en ce qu'**entre l'étape h) et l'étape i), l'unité de manipulation (9) conjointement avec le pneu brut (16) est pivotée dans une position de ralentissement (P₄) dans laquelle le mouvement de rotation de l'unité de manipulation (9) se termine et/ou est freiné.

15. Procédé selon l'une des revendications 8 à 14, **caractérisé en ce qu'**entre l'étape i) et l'étape j), le chariot (8) orienté selon l'étape b) est coulissé pour retourner dans sa position initiale.
